# EUROPÄISCHE PATENTSCHRIFT

(11) **EP 1 294 775 B1**
(45) Veröffentlichungstag und Bekanntmachung des Hinweises auf die Patenterteilung: **19.10.2005**
(21) Anmeldenummer: 01960308.3
(22) Anmeldetag: 13.06.2001
(51) Int. Cl.: C08F 2/38, C08F 293/00

(54) **VERFAHREN ZUR HERSTELLUNG EINES POLYMEREN UMSETZUNGSPRODUKTS**
METHOD FOR THE PRODUCTION OF A POLYMERISATION REACTION PRODUCT
PROCEDE DE PRODUCTION D'UN PRODUIT DE REACTION POLYMERE

(30) Priorität: 16.06.2000 DE 10029695
(43) Veröffentlichungstag der Anmeldung: 26.03.2003
(73) Patentinhaber: BASF Aktiengesellschaft, 67056 Ludwigshafen (DE)
(72) Erfinder: RAETHER, Roman, Benedikt, 67117 Limburgerhof (DE); BRINKMANN-RENGEL, Susanne, 55270 Ober-Olm (DE); HAREMZA, Sylke, 69151 Neckargemünd (DE); BREMSER, Wolfgang, 48165 Münster (DE)
(74) Vertreter: Isenbruck, Günter
(86) Internationale Anmeldenummer: PCT/EP2001/006714
(87) Internationale Veröffentlichungsnummer: WO 2001/098373

(56) Entgegenhaltungen:
- WO-A-00/39169
- WO-A-97/13792
- WO-A-98/37104
- US-A- 4 656 226
- US-A- 5 264 530
- US-A- 5 385 996
- US-A- 5 395 903
- US-A- 5 773 543
- PATENT ABSTRACTS OF JAPAN vol. 1996, no. 05, 31. Mai 1996 (1996-05-31) & JP 08 003208 A (NIPPON STEEL CHEM CO LTD), 9. Januar 1996 (1996-01-09)

## Beschreibung

Die vorliegende Erfindung betrifft ein Verfahren zur Herstellung eines Umsetzungsprodukts (A) durch Reaktion unter radikalischen Bedingungen mindestens eines radikalisch umsetzbaren Monomers (a) in Gegenwart mindestens eines radikalischen Initiators sowie einer Verbindung (I) und/oder Verbindung (II), wie nachstehend definiert, dieses Umsetzungsprodukt an sich, ein Verfahren zur Herstellung eines Polymers unter Verwendung dieses Umsetzungsprodukts, sowie deren Verwendung in Polymerdispersionen oder zur Herstellung von Folien, Formkörpern, Fasern oder Schäumen.

Die vorliegende Erfindung liegt auf dem technischen Gebiet der radikalischen Polymerisation. Durch entsprechende Auswahl an Monomeren und ggf. aufeinanderfolgende Zugabe von verschiedenen Monomeren können sowohl unverzweigte als auch verzweigte Homo- und Copolymere sowie Blockcopolymere hergestellt werden. Dabei betrifft die vorliegende Erfindung neben den Polymeren an sich auch ein in einer ersten Stufe erhaltenes Umsetzungsprodukt.

Seit einigen Jahren besteht ein starkes Interesse an Verfahren bzw. Verfahrenskonzepten, die sich zur Herstellung einer Vielzahl von Polymeren eignen und es ermöglichen, derartige Polymere mit vorbestimmter Struktur, Molekulargewicht und Molekulargewichtsverteilung bereit zu stellen.
So beschreibt die WO 98/01478 ein Verfahren zur Herstellung von Polymeren, bei dem das umzusetzende Monomer, das insbesondere unter Vinylmonomeren und ungesättigte Gruppen aufweisenden Säurederivaten, wie z.B. Anhydride, Ester und Imide der (Meth)acrylsäure ausgewählt wird, in Gegenwart eines radikalischen Starters und einer Thiocarbonylthio-Verbindung als Kettenüber-tragungsmittel umgesetzt wird.

Die WO 92/13903 beschreibt ein Verfahren zur Herstellung von Polymeren mit einem niedrigen Molekulargewicht durch Radikalkettenpolymerisation von einem oder mehreren Monomeren in Gegenwart eines Gruppenübertragungsmittels, wie darin definiert, das eine C-S-Doppelbindung aufweist. Ausweislich dieser Druckschrift wirken die dort beschriebenen, eine C-S-Doppelbindung aufweisenden Verbindungen nicht nur als Kettenübertragungsmittel, sondern auch als Wachstumsregler, so daß es gemäß dieser Druckschrift lediglich möglich ist, in Gegenwart dieser Verbindung Polymere mit niedrigem Molekulargewicht herzustellen.

Ein Verfahren zur Radikalkettenpolymerisation ungesättigter Monomere in wäßrigem Medium und in Anwesenheit eines Makromonomers mit einer -CH₂-C(X)=CH₂-Endgruppe, in der X wie darin definiert ist, wird in der WO 93/22351 beschrieben. Ausweislich der Beispiele dieser Anmeldung werden dort jeweils verschiedene (Meth)acrylate bzw. (Meth)acrylsäure und ggf. Monomere wie Styrol unter Emulsions- oder Suspensionspolymerisations-Bedingungen umgesetzt.

Die WO 93/22355 betrifft ein Verfahren zur Herstellung vernetzbarer Polymere unter Verwendung eines Makromonomers wie in der WO 93/22351 beschrieben.
Die WO 96/15157 beschreibt ebenfalls ein Verfahren zur Herstellung von Polymeren mit vergleichsweise enger Molekulargewichtsverteilung, in dem ein Vinylmonomer, wie darin definiert, mit einem ebenfalls Vinyl-terminierten Makromonomer in Anwesenheit eines radikalischen Initiators umgesetzt wird.
Ferner betrifft die WO 98/37104 die Herstellung von bzgl. des Molekulargewichts kontrollierten Polymeren, u.a. solchen auf Acrylat-Basis, durch radikalische Polymerisation von entsprechenden Monomeren unter Verwendung eines darin näher definierten Kettenüberbragungsmittels mit einer C-C-Doppelbindung und Resten, die diese Doppelbindung bzgl. der radikalischen Anlagerung von Monomeren aktivieren.

Eine Radikalkettenpolymerisation bzw. -copolymerisation mit einem ω-ungesättigten Oligo(methylmethacrylat) mit Ethylacrylat, Styrol, Methylmethacrylat, Acrylnitril und vinylacetat als Copolymere wird in einem wissenschaftlichen Artikel in J. Macromol. Sci. Chem., A 23 (7), 839 - 852 (1986) beschrieben.

Weiterhin werden in Macromol. Chem. Phys. 201 74 - 83 (2000) Radikalkettenpolymerisationen bzw. -copolymerisationen unter Verwendung von 1,2-(Trimethylsilyloxy)tetraphenylethan) beschrieben, wobei dort als Monomere Methylmethacrylat, Styrol, Phenylacetat, Butylacrylat und Glycidylmethacrylat eingesetzt wurden.

Eine Übersicht über Radikalkettenpolymerisationen unter Verwendung von insbesondere Tetraphenylethan(derivaten) wird seitens Otsu und Matsumoto in Advances in Polymer Science, 136, S. 75 - 137 sowie in Polymer Bulletin, 16, S. 95 - 102 (1986) beschrieben.

Ferner berichten Harwood et al. in Macromol. Symp., 111, S. 25 - 35 (1996) über NMR-Untersuchungen an statistischen, Block- und Propfcopolymeren unter Verwendung von NMR-Sensitiven Startern und Makro-Startern. Dort wird u. a. die Umsetzung eines Methylmethacrylats-Stilben-Gemisches und die Eigenschaften des daraus resultierenden Polymers beschrieben.

Ein Verfahren zur Herstellung eines polymeren Umsetzungsprodukts unter Verwendung von insbesondere Diphenylethylen und dessen Derivaten wird in der DE 19858708.2 beschrieben.

EP-A 0 313 092 betrifft ein Verfahren zur Herstellung von Ethylen-Copolymeren unter Verwendung eines Diphenylethan-Derivats als C-C-labilem Polymerisationsinitiator.

DE-A 198 03 098 betrifft ein Verfahren zur Herstellung eines partikelförmigen Polymerisats, bei dem aus einem oder mehreren ethylenisch ungesättigten Monomeren, die durch radikalische Polymerisation zu dem Polymerisat polymerisierbar sind, Wasser und mindestens einem Schutzkolloid oder mindestens einem Emulgator oder Mischungen davon durch Einwirkung hoher Scherkräfte eine Emulsion hergestellt wird und die Emulsion unter Verwendung eines radikalischen Polymerisationsinitiators im Beisein eines stabilen N-Oxyl-Radikals einer Polymerisation unterworfen wird. Als Initiatoren können gemäß DE-A 198 03 098 Verbindungen mit C-C-Einfachbindungen verwendet werden.

In Anbetracht dieses Standes der Technik lag die Aufgabe der vorliegenden Erfindung darin, ein neues Verfahren zur Herstellung eines ebenfalls u. a. als Makroinitiator verwendbaren Umsetzungsprodukts bereitzustellen, das zum einen selbst u.a. als Emulgator oder Dispergator anwendbar ist und mit dessen Hilfe auch weitere radikalisch homo- oder copolymerisierbare Monomere umgesetzt werden können, um zu weiteren, gegebenenfalls anders zusammengesetzten Polymeren zu gelangen. Ferner lag der vorliegenden Erfindung die Aufgabe zugrunde, eine gezielte Einstellung von Eigenschaften von Polymeren und dadurch eine vielseitige Einsatzmöglichkeit solcher Polymere, die erhältlich sind durch einfache radikalische Polymerisation, zu ermöglichen, insbesondere durch Herstellung von Blockstrukturen mittels radikalischer Polymerisation bereitzustellen.

Unter einer "unterschiedlichen Monomerenzusammensetzung" wird im Rahmen der vorliegenden Erfindung der Befund verstanden, daß mindestens zwei Bereiche des Blockcopolymeren eine unterschiedliche Monomerenzusammensetzung aufweisen. Es ist im Rahmen der vorliegenden Erfindung möglich, daß der Übergang zwischen zwei Blöcken kontinuierlich verläuft, das heißt, daß zwischen zwei Blöcken eine Zone existiert, die eine statistische oder regelmäßige Abfolge der die Blöcke konstituierenden Monomere aufweist. Es ist jedoch im Rahmen der vorliegenden Erfindung ebenso vorgesehen, daß der Übergang zwischen zwei Blöcken im wesentlichen diskontinuierlich verläuft. Unter einem "im wesentlichen diskontinuierlichen Übergang" wird eine Übergangszone verstanden, die eine deutlich geringere Länge als mindestens einer der durch die Übergangszone getrennten Blöcke aufweist. Es ist dabei möglich, daß ein Block nur auf einer Art von Monomeren basiert. Es ist jedoch ebenso vorgesehen, daß ein Block aus zwei oder mehr Monomeren aufgebaut ist. In einer bevorzugten Ausführungsform der vorliegenden Erfindung beträgt die Kettenlänge einer solchen Übergangszone weniger als 1/10, vorzugsweise weniger als 1/20 der Blocklänge mindestens eines der durch die Übergangszone getrennten Blöcke.
Unter einer "unterschiedlichen Monomerenzusammensetzung" wird im Rahmen der vorliegenden Erfindung weiterhin der Befund verstanden, daß sich die den jeweiligen Block konstituierenden Monomeren in mindestens einem Merkmal, beispielsweise in ihrer Verknüpfung untereinander, in ihrer Konformation oder Konstitution unterscheiden. Wenn, wie oben bereits beschrieben, ein Block auf mehr als einer Art von Monomeren aufgebaut ist, so können sich im vorliegenden Kontext verschiedene Blöcke des Blockcopolymeren beispielsweise auch durch unterschiedliche Konzentrationen der jeweils einen Block konstituierenden Monomeren unterscheiden.

Diese und weitere Aufgaben werden gelöst durch das erfindungsgemäße Verfahren zur Herstellung eines Umsetzungsprodukts (A'), das die folgende Stufe (i) umfaßt:
(i) Reaktion unter radikalischen Bedingungen eines Reaktionsgemischs, umfassend mindestens ein radikalisch umsetzbares Monomer (a) in Gegenwart mindestens einer Verbindung der Formel (II) 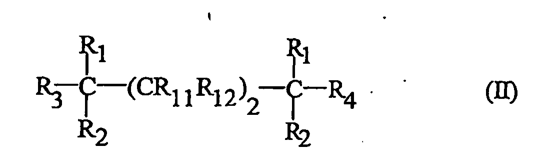 wobei R₁ bis R₄ und R₁₁ und R₁₂ jeweils unabhängig voneinander Wasserstoff, Methyl oder eine Radikale stabilisierende und/oder sterisch anspruchsvolle Gruppe ausgewählt unter einem jeweils unsubstituierten oder substituierten, linearen oder verzweigtkettigen Alkyl mit zwei oder mehr C-Atomen, Cycloalkyl-, Alkohol-, Ether-, Polyether-, Amin-, Aralkylrest, einen substituierten oder unsubstituierten aromatischen, heterocyclischen oder olefinischen Kohlenwasserstoff, ein Halogenatom, eine substituierte oder unsubstituierte, lineare oder verzweigtkettige Alkenyl- oder Alkinylgruppe, -C(O)R₅, -C(O)OR₅, -CR₅R₆-O-R₇, -O-C(O)R₅, -CN, -O-CN, -S-CN, -O-C=NR₅, -S-C=NR₅, -O-CR₅R₆-CR₇R₈NR₉R₁₀, -N=C=O, -C=NR₅, -CR₅R₆-Hal, -C(S)R₅, -CR₅R₆-P(O)R₇R₈, -CR₅R₆-PR₇R₈, -CR₅R₆-NR₇R₈, -CR₅R₆(OR₇)(OR₈), -CR₅R₆(OR₇)(NR₈), -CR₅R₆(NR₇)(NR₈), eine Säureanhydrid-, Acetal-, Ketalgruppe, -SO₂R₅, eine Amidingruppe -NR₅C(S)NR₆, -NR₅C(S)-OR₆, -N=C=S, -NO₂, -C=N-OH, -N(R₅)=NR₆, -PR₅R₆R₇, -OSiR₅R₆R₇, oder -SiR₅R₆R₇, ist, wobei R₅ bis R₁₀ jeweils unabhängig voneinander wie R₁ bis R₄ definiert sind, oder zwei oder drei der Reste R₁ bis R₄ einen C₄- bis C₇-Ring der wiederum substituiert oder unsubstituiert sein kann sowie gegebenenfalls ein oder mehrere Heteroatome enthalten kann oder aromatisch sein kann, bilden,
   mit der Maßgabe, daß
   mindestens zwei der R₁ bis R₄ eine Radikale stabilisierende und/oder sterisch anspruchsvolle Gruppe, wie oben definiert, sind,
   dadurch gekennzeichnet, dass die Reaktion in Gegenwart mindestens einer Base durchgeführt wird,
   sowie ein Verfahren zur Herstellung eine Polymers (B), das umfaßt:
(ii) Umsetzung des in Stufe (i) erhaltenen Umsetzungsprodukts (A') unter radikalischen Bedingungen in Gegenwart von mindestens einem, radikalisch homo- oder copolymerisierbaren Monomer (b).

Im Rahmen des obigen erfindungsgemäßen Verfahrens können alle radikalisch umsetzbaren Monomere als Monomer (a) eingesetzt werden. Vorzugsweise werden als Monomer (a) radikalisch homo- oder copolymerisierbaren Verbindungen eingesetzt.

Selbstverständlich können auch Gemische verschiedener Monomere im Rahmen der vorliegenden Erfindung als Monomere (a) eingesetzt werden.

Darüber hinaus lassen sich gemäß dem oben genannten Verfahren auch Gemische aus mindestens einem hydrophilen Monomeren und mindestens einem hydrophoben Monomeren polymerisieren.

Im einzelnen sind als Monomere (a) zu nennen:
Diene, wie Butadien, Isopren, Myrcen oder Pentadien, sowie weiterhin C₁- bis C₂₀-Alkyl- und Hydroxyalkylester von monoethylenisch ungesättigten C₃- bis C₁₀-Monocarbonsäuren oder C₄- bis C₈-Dicarbonsäuren, beispielsweise Methylmethacrylat, Ethylmethacrylat, Propylmethacrylat (alle Isomere), Butylmethacrylat (alle Isomere), 2-Ethylhexylmethacrylat, Isobornylmethacrylat, Methylacrylat, Ethylacrylat, Propylacrylat (alle Isomere), Butylacrylat (alle Isomere), 2-Ethylhexylacrylat, Isobornylacrylat, Benzylacrylat, Phenylacrylat, Stearylacrylat, Maleinsäurediethylester, Hydroxyeihylacrylat, Hydroxypropylacrylat, Hydroxybutylacrylat, weiterhin (Meth)Acrylester von alkoxylierten C₁- bis C₁₈-Alkoholen, die mit 2 bis 50 mol Ethylenoxid, Propylenoxid, Butylenoxid oder Mischungen hiervon umgesetzt sind; Benzylmethacrylat, Phenylmethacrylat, Stearylmethacrylat, Methacrylnitril, Acrylnitril, funktionalisierte Methacrylate; Acrylate und Styrole, ausgewählt unter Glycidylmethacrylat, 2-Hydroxyethylmethacrylat, Hydroxypropylmethacrylat (alle Isomere), Hydroxybutylmethacrylat (alle Isomere), Cyclohexylmethacrylat, Cyclohexylacrylat,Hexylmethacrylat und Hexylacrylat (jeweils alle Isomere), Diethylaminoethylmethacrylat, Triethylenglycolmethacrylat, Itaconsäureanhydrid, Itaconsäure, Glycidylacrylat, 2-Hydroxyethylmethacrylat, Diethylaminoethylacrylat, Triethylenglycolacrylat, Methacrylamid, N-tert.-Butylmethacrylamid, N-n-Butylmethacrylamid, N-Methylol-methacrylamid, N-Ethylolmethacrylamid, N-tert-Butylacrylamid, N-Butylacrylamid, N-Methylolacrylamid, N-Ethylolacrlyamid, Vinylbenzoesäure (alle Isomere), Diethylaminostyrol (alle Isomere), α-Methylvinylbenzoesäure (alle Isomere), Diethylamino-α-methylstyrol (alle Isomere), p-Methylstyrol, p-Vinylbenzolsulfonsäure, Trimethoxysilylpropylmethacrylat, Triethoxysilylpropylmethacrylat, Tributoxysilylpropylmethacrylat, Diethoxymethylsilylpropylmethacrylat, Dibutoxymethylsilylpropylmethacrylat, Diisopropoxymethylsilylpropylmethacrylat, Dimethoxysilylpropylmethacrylat, Diethoxysilylpropylmethacrylat, Dibutoxysilylpropylmethacrylat, Diisopropoxysilylpropylmethacrylat, Trimethoxysilylpropylacrylat, Triethoxysilylpropylacrylat, Tributoxysilylpropylacrylat, Dimethoxymethylsilylpropylacrylat, Diethoxymethylsilylpropylacrylat, Dibutoxymethylsilylpropylacrylat, Diisopropoxymethylsilylpropylacrylat, Dimethoxysilylpropylacrylat, Diethoxysilylpropylacrylat, Dibutoxysilylpropylacrylat, Diisopropoxysilylpropylacrylat, Vinylacetat und Vinylbutyrat, Vinylchlorid, Vinylfluorid, Vinylbromid, Vinylalkohol, Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, monoethylenisch ungesättigte C₃- bis C₁₀-Monocarbonsäuren, deren Alkalimetallsalze und/oder Ammoniumsalze, beispielsweise Acrylsäure, Methacrylsäure, Dimethylacrylsäure, Ethylacrylsäure, Allylessigsäure oder Vinylessigsäure, weiterhin monoethylenisch ungesättigte C₄- bis C₈-Dicarbonsäuren, deren Halbester, Anhydride, Alkalimetallsalze und/oder Ammoniumsalze, beispielsweise Maleinsäure, Fumarsäure, Itaconsäure, Mesaconsäure, Methylenmalonsäure, Citraconsäure, Malemsäureanhydrid, Itaconsäureanhydrid oder Methylmalonsäureanhydrid; weiterhin Sulfonsäuregruppen oder deren Salze, beispielsweise deren Alkalimetall- oder Ammoniumsalze enthaltende monoethylenisch ungesättigte Monomere, beispielsweise Allylsulfonsäure, Styrolsulfonsäure, 2-Acryl-amido-2-methylpropan-sulfonsäure (AMPS), Methallylsulfonsäure, Vinylsulfonsäure, Acrylsäure-3-sulfopropyl-ester oder Methacrylsäure-3-sulfopropylester, weiterhin Phosphonsäuregruppen oder deren Salze, beispielsweise deren Alkalimetall- oder Ammoniumsalze enthaltende monoethylenisch ungesättigte Monomere, beispielsweise Vinylphosphonsäure, Allylphosphonsäure oder Acrylamidoethylpropanphosphonsäure, weiterhin Amide und N-substituierte Amide von monoethylenisch ungesättigten C₃- bis C₁₀-Monocarbonsäuren oder C₄- bis C₈-Dicarbonsäuren, beispielsweise Acrylamid, N-Alkylacrylamide oder N,N-Dialkylacrylamide mit jeweils 1 bis 18 C-Atomen in der Alkylgruppe wie N-Methylacrylamid, N,N-Dimethylacrylamid, N-tert.-Butylacrylamid oder N-Octadecylacrylamid, Maleinsäuremonömethylhexylamid, Maleinsäuremonodecylamid, Diethylaminopropylmethacrylamid oder Acrylamidoglykolsäure; weiterhin Alkylaminoalkyl(meth)acrylate, beispielsweise Dimethylaminoethylacrylat, Dimethylaminoethylmethacrylat, Ethylaminoethylacrylat, Diethylaminoethylmethacrylat, Dimethylaminopropylacrylat oder Dimethylaminopropylmethacrylat; weiterhin Vinylester, beispielsweise Vinylformiat, Vinylacetat oder Vinylpropionat, wobei diese nach der Polymerisation auch verseift vorliegen können; weiterhin N-Vinylverbindungen, beispielsweise N-Vinylpyrrolidon, N-Vinylcaprolactam, N-Vinylformamid, N-Vinyl-N-methylformamid, 1-Vinylimidazol oder 1-Vinyl-2-methylimidazol; weiterhin Vinylether von C₁- bis C₁₈-Alkoholen, Vinylether von alkoxylierten C₁- bis C₁₈-Alkoholen und Vinylether von Polyalkylenoxiden wie Polyethylenoxid, Polypropylenoxid oder Polybutylenoxid, Styrol oder dessen Derivate wie α-Methylstyrol, Inden, Dicyclopentadien, Monomere, die Amino- oder Iminogruppen wie Dimethylaminoethylmethacrylat, Diethylaminoethylacrylat, Diethylaminopropylmethacrylamid oder Allylamin, Monomere, die quartäre Ammoniumgruppen tragen, wie z.B. vorliegend als Salze, wie sie durch Umsetzung der basischen Aminofunktionen mit Säuren wie Salzsäure, Schwefelsäure, Salpetersäure, Ameisensäure oder Essigsäure erhalten werden, oder in quaternisierter Form (Beispiele geeigneter Quaternisierungsmittel sind Dimethylsulfat, Diethylsulfat, Methylchlorid, Ethylchlorid oder Benzylchlorid), wie z.B. Dimethylaminoethylacrylat-hydrochlorid, Diallyldimethylammoniumchlorid, Dimethylaminoethylacrylat-methylchlorid, Dimethylaminoethylaminopropylmethacrylamid-methosulfat, Vinylpyridiniumsalze oder 1-Vinylimidazoliumsalze; Monomere, bei denen die Aminogruppen und/oder Ammoniumgruppen erst nach der Polymerisation und anschließender Hydrolyse freigesetzt werden, wie beispielsweise N-Vinylformamid oder N-Vinylacetamid sowie Gemische aus zwei oder mehr der vorstehend genannte Monomeren.

Vorzugsweise finden als ein erstes Monomer (a) Styrole, Acrylnitril, (Meth)acrylate bzw. deren freie Säure, Diene oder N-Vinylverbindungen, vorzugsweise die Vertreter dieser Gruppe, die bereits oben genannt sind, oder Gemische aus zwei oder mehr, gegebenenfalls mit mindestens einem weiteren radikalisch homo- oder copolymerisierbaren Monomer (a), Verwendung.

Weiterhin wird erfindungsgemäß bei der Herstellung des Umsetzungsprodukts (A) eine Verbindung der Formel (II) 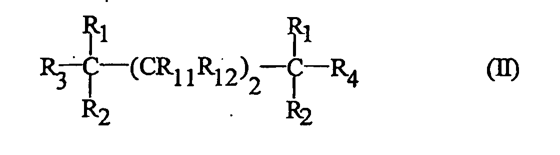 eingesetzt.

Auch hier sind prinzipiell alle Verbindungen der o.g. Formel erfindungsgemäß einsetzbar, sofern sie der vorstehenden bzw. der in den Ansprüchen gegebenen Definition entsprechen.

Dabei ist es insbesondere wichtig, daß mindestens zwei der Reste R₁ bis R₄ eine radikalisch stabilisierende und/oder sterisch anspruchsvolle Gruppe darstellen. Dabei bedeutet der Begriff "sterisch anspruchsvolle Gruppe", wie er im Rahmen der vorliegenden Erfindung verwendet wird, daß es sich dabei um eine Gruppe handelt, deren Dimension in dem jeweils bei der erfindungsgemäßen Reaktion unter radikalischen Bedingungen größer oder gleich der Dimension eines Isopropyl-Rests ist. Der erfindungsgemäß verwendete Begriff "radikalisch stabilisierende Gruppe" bezeichnet Gruppen der in Anspruch 1 definierten Art, deren Elektronenstruktur eine Stabilisierung von Radikalen ermöglicht.

Im einzelnen sind dabei folgende Gruppen der oben stehenden Art zu nennen:
verzweigtkettige Alkylgruppen mit drei oder mehr C-Atomen, insbesondere Isopropyl und tert-Butyl; Cycloalkylgruppen, wie zum Beispiel unsubstituiertes oder substituiertes Cyclopentyl oder Cyclohexyl; Alkoholgruppen, wie zum Beispiel Reste verzweigter Alkohole, wie zum Beispiel Isopropyloxy oder tert.-Butyloxy; Aralkylreste; substituierte oder unsubstituierte aromatische oder heterocyclische Kohlenwasserstoffe, wie zum Beispiel Phenyl, Pyridyl; Halogen; Cyano; Nitro; Estergruppen der Struktur -C(O)OR₅, wie zum Beispiel lineare oder verzweigte, gegebenenfalls substituierte Alkyle, Aralkyle, aromatische oder heteroaromatische Verbindungen.

Insbesondere werden als Verbindung der Formel (II) 9-Methylenxanthen; 9-Methylenthioxanthen, 9-Methylen-10-H-acridin und Gemischen aus zwei oder mehr davon, eingesetzt.

Die Radikalbildung kann erfindungsgemäß durch unterschiedliche Methoden erfolgen. So ist eine thermische, photo-chemische, elektro-chemische oder elektronentransferinduzierte Erzeugung ebenso möglich wie die Verwendung von Oxidations- oder Reduktionsmittel zur Radikalerzeugung.

Darüber hinaus kann das erfindungsgemäße Verfahren in Gegenwart mindestens eines radikalischen Initiators durchgeführt werden. Weiterhin sind auch thermisch, elektro-chemisch oder photo-chemisch initierende Monomere als Initiatoren einsetzbar. Im allgemeinen können jedoch alle bei der Radikalkettenpolymerisation herkömmlicherweise verwendeten Azo- und/oder Peroxo-Verbindungen und/oder Verbindungen mit homolytisch spaltbaren C-C-Bindungen eingesetzt werden. Geeignete Initiatoren sind in der WO 98/01478 auf S. 10, Z. 17 bis S. 11, Z. 15 beschrieben, die diesbezüglich vollumfänglich in den Kontext der vorliegenden Anmeldung aufgenommen wird, außerdem können 3,4-Dimethyl-3,4-diphenylhexan bzw. 2,3-Dimethyl-2,3-diphenylbutan eingesetzt werden. Vorzugsweise werden Initiatoren eingesetzt, die im jeweils verwendeten Reaktionssystem löslich sind. Bei Umsetzung in wäßriger Phase werden vorzugsweise oxidierende radikalische Initiatoren, wie z.B. Kalium-, Natrium- und Ammoniumperoxodisulfat, oder eine Kombination eines herkömmlichen, d.h. eines nicht oxidierenden Initiators mit H₂O₂, eingesetzt. Ferner sind Dicumylperoxid, Dibenzoylperoxid, Dilaurylperoxid, AIBN einsetzbar.

In einer bevorzugten Ausführungsform des erfindungsgemäßen Verfahrens wird eine vergleichsweise große Menge an radikalischem Initiator zugegeben, wobei der Anteil an radikalischem Initiator am Reaktionsgemisch vorzugsweise 1 bis 50 Gew.-%, weiter bevorzugt 0,5 bis 20 Gew.-%, jeweils bezogen auf die Gesamtmenge des Monomers (a) und des Initiators, beträgt. Vorzugsweise beträgt das molare Verhältnis Initiator zu Verbindung (I) 3:1 bis 1:3, weiter bevorzugt 2:1 bis 1:2, und insbesondere 1,5:1 bis 1:1,5.

Wird die beschriebene Reaktion gemäß Stufe (i) in wäßriger Phase durchgeführt, so wird unter dem Begriff "wäßrige Phase" im Rahmen des vorliegenden Textes eine Phase verstanden, die 10 bis 100 Gew.-% Wasser enthält. Liegt der Wasseranteil der wäßrigen Phase bei weniger als 10 %, so ist es im Rahmen der vorliegenden Erfindung bevorzugt, wenn die wäßrige Phase ein Gemisch aus Wasser und einem oder mehreren wassermischbaren Lösemitteln wie THF, Methanol, Ethanol, Propanol, Butanol, Aceton, Methyl-Ethyl-Keton oder dergleichen enthält. Es ist jedoch ebenfalls möglich, die Umsetzung gemäß Stufe (i) in Gegenwart eines Gemisches aus Wasser und einem nicht wassermischbaren Lösemittel wie einem aromatischen Lösemittel, beispielsweise Toluol, durchzuführen.

Die obige Reaktion gemäß Stufe (i) wird in Gegenwart mindestens einer Base durchgeführt. Dabei sind als niedermolekulare Basen prinzipiell alle niedermolekularen Basen zu verwenden, wobei NaOH, KOH, Ammoniak, Diethanolamin, Triethanolamin, Mono-, Di-, oder Triethylamin, Dimethylethanolamin, oder ein Gemisch aus zwei oder mehr davon bevorzugt und Ammoniak und Di- und Triethanolamin besonders bevorzugt sind.

Es ist jedoch ebenso möglich, die Reaktion gemäß Stufe (i) in einem organischen Lösemittel oder lösemittelfrei ("in Substanz"), beispielsweise in der Schmelze, durch zuführen. Wenn im Rahmen der vorliegenden Erfindung von einer Reaktionsführung in einem organischen Lösemittel oder lösemittelfrei gesprochen wird, so wird darunter eine Reaktionsführung verstanden, die in Gegenwart von weniger als 10 Gew.-%, vorzugsweise weniger als 5 Gew.-% oder weniger als 1 Gew.-% Wasser abläuft. In einer weiteren Ausführungsform der vorliegenden Erfindung wird in der erfindungsgemäßen Bindemittelzusammensetzung mindestens ein Blockcopolymeres eingesetzt, bei dessen Herstellung Stufe (i) in einem organischen Lösemittel oder lösemittelfrei durchgeführt wurde, wobei der Wassergehalt des Reaktionsgemisches weniger als 0,5 Gew.-% betrug, beispielsweise weniger als 0,3 Gew.-% oder weniger als 0,1 Gew.-%. In einer weiteren Ausführungsform der vorliegenden Erfindung wird die Reaktionsführung der Stufe (i) wasserfrei durchgeführt, das heißt, mit einem Wassergehalt von weniger als 0,001 Gew.-%. Solche Wassergehalte lassen sich beispielsweise durch die Verwendung von kommerziell erhältlichen Lösemitteln, wie sie üblicherweise bei radikalischen Polymerisationen als organische Lösemittel eingesetzt werden, erreichen.

Als Lösemittel eignen sich im Rahmen der vorliegenden Erfindung grundsätzlich alle polaren und unpolaren organischen Lösemittel in denen die entsprechenden und vorzugsweise auch die entstehenden Polymeren, gegebenenfalls bei erhöhter Temperatur, löslich sind. Geeignete Lösemittel sind beispielsweise C3 bis C10 Alkane, Cyclohexan, Decalin, Aceton, Methylethylketon, Düsobutylketon, Tetrahydrofuran, Dioxan, Benzol, Toluol, Glykole wie Ethylenglykol, Triethylenglykol, teilweise oder völlig endgruppenverschlossene Glykolether wie Ethylenglykolmonomethylether, Essigsäureethylester, Methanol oder Ethanol oder die höheren Homologen der Alkanole mit bis zu 18 C-Atomen (gegebenenfalls als Cosolvens) oder Gemische aus zwei oder mehr davon.

Die Reaktion gemäß Stufe (i) wird im allgemeinen bei Temperaturen oberhalb Raumtemperatur und unterhalb der Zersetzungstemperatur der Monomeren durchgeführt, wobei vorzugsweise ein Temperaturbereich von 50 bis 200 °C, weiter bevorzugt 70 bis 150 °C und insbesondere 80 bis 120 °C gewählt wird.

Die Reaktion gemäß Stufe (i) wird im allgemeinen bei Drücken von 1 bis 300 bar, beispielsweise von etwa 1,5 bis 100 oder etwa 2 bis etwa 20 bar durchgeführt.

Obwohl bzgl. der Molekulargewichtsverteilung keinerlei Beschränkungen existieren, kann in der Reaktion gemäß (i) ein Umsetzungsprodukt erhalten werden, das eine Molekulargewichtsverteilung M_{w}/Mₙ gemessen mit Gelpermeationschromatographie unter Verwendung von Polystyrol als Standard von ≤ 4, vorzugsweise ≤ 3, weiter bevorzugt ≤ 2, insbesondere ≤ 1,5 und in einzelnen Fällen auch ≤ 1,3 besitzt. Die Molekulargewichte des Umsetzungsprodukts (A) sind durch die Wahl der Verhältnisses Monomere (a) zu Verbindungen (I) zu radikalischem Initiator in weiten Grenzen steuerbar. Dabei bestimmt insbesondere der Gehalt an Verbindung (I) das Molekulargewicht, und zwar derart, daß je größer der Anteil an Verbindung (I) ist, desto geringer das erhaltene Molekulargewicht.

Die Umsetzung gemäß Stufe (i) kann auch in Gegenwart einer oberflächenaktiven Substanz durchgeführt werden.

Das in der Reaktion gemäß (i) erhaltene Umsetzungsprodukt, kann dabei direkt weiter verarbeitet werden, oder aber als Makroinitiator für die weitere Umsetzung gemäß Stufe (ii), wie weiter unten hierin definiert, eingesetzt werden. Ferner ist es möglich, das Umsetzungsprodukt gemäß Stufe (i) als Feststoff zu isolieren und dann weiter umzusetzen oder einer Anwendung zuzuführen.

Dabei kann in der Umsetzung gemäß Stufe (ii) mindestens ein frei wählbares, radikalisch homo- oder copolymerisierbares Monomer (b) umgesetzt werden, wobei als Monomere (b) die bereits im Rahmen der Erläuterung der Monomeren (a) genannten Monomeren geeignet sind.

Dabei kann Monomer (b) gleich oder verschieden sein vom in der Stufe (i) eingesetzten Monomer (a). Selbstverständlich können auch Gemische aus zwei oder mehr Monomere als Monomer (a) bzw. Monomer (b) eingesetzt werden. Die Auswahl des Monomers (b) erfolgt prinzipiell nach der gewünschten Struktur des in Stufe (ii) hergestellten Polymers und damit in Abhängigkeit von der angestrebten Verwendung dieses Polymers.

Im einzelnen sind die folgenden, vorzugsweise einzusetzende Monomere (b) zu nennen:
Styrol und Derivate, wie z.B. Styrolsulfonsäure, Methacrylsäure und Acrylsäure, sowie die Ester die Säuren mit Methanol, Ethanol, Propanol (alle Isomere), Butanol (alle Isomere), Hexan (alle Isomere), Vinylacetat, Hydroxyethylacrylat, Hydroxyethylmethacrylat, N-Vinylverbindungen wie z.B. N-Vinylpyrroldion, sowie Diene wie z.B. Butadien, Isopren, Myrcen und Pentadien.

Demgemäß betrifft die vorliegende Erfindung auch ein Verfahren zur Herstellung eines Polymers (B), das umfaßt:
(ii) Umsetzung des in Stufe (i) erhaltenen Umsetzungsprodukts (A) unter radikalischen Bedingungen in Gegenwart mindestens einem radikalisch homo- oder copolymerisierbaren Monomer (b).

Die Umsetzung gemäß Stufe (ii) wird prinzipiell nach den üblichen Bedingungen für eine radikalische Polymerisation durchgeführt, wobei geeignete Lösungsmittel anwesend sein können.

Die Durchführung der Stufe (ii) kann dabei in einer weiteren Ausführungsform der vorliegenden Erfindung in Gegenwart von Verbindungen der allgemeinen Formel II durchgeführt werden, die nach Abschluß der Stufe (i) zugesetzt werden.

Dabei können die Stufen (i) und (ii) im Rahmen des erfindungsgemäßen Verfahrens sowohl räumlich als auch zeitlich getrennt voneinander durchgeführt werden, wobei dann selbstverständlich zunächst Stufe (i) und anschließend Stufe (ii) durchgeführt wird. Darüber hinaus können jedoch die Stufen (i) und (ii) auch in einem Reaktor nacheinander, d.h. zunächst wird die Verbindung der Formel (II) mit mindestens einem Monomer (a) vollständig oder teilweise in Abhängigkeit von der gewünschten Anwendung bzw. der gewünschten Eigenschaften, umgesetzt und anschließend mindestens ein Monomer (b) zugegeben und radikalisch polymerisiert oder aber von Anfang an ein Monomerengemisch umfassend mindestens ein Monomer (a) und mindestens ein Monomer (b) eingesetzt und mit der Verbindung (II) zur Reaktion gebracht. Dabei wird angenommen, daß die Verbindung (II) zunächst mit dem mindestens einen Monomeren (a) reagiert und anschließend das daraus gebildete Umsetzungsprodukt (A') oberhalb eines bestimmten Molekulargewichts auch mit dem Monomeren (b) reagiert. Diesbezüglich ist insbesondere anzumerken, daß die erfindungsgemäße Co(polymerisation) auch nach einer eventuellen Unterbrechung ohne erneute Initiatorzugabe durch Aufheizen auf eine Temperatur bei der der gemäß Umsetzungsprodukt (A') gebildete Makroinitiator wieder zerfällt, weitergeführt werden kann.

Das entstandene Polymer (Umsetzungsprodukt (A')) kann isoliert oder *in situ* zum Start der (Weiter)polymerisation neu erwärmt werden. Dabei kann weiteres Monomer (b) direkt zugegeben werden. Dabei kann Monomer (b) gleich oder verschieden zu Monomer (a) sein. Man kann auch von Anfang an Monomergemische einsetzen. Dabei kann der Schritt (ii) gegebenenfalls nach Isolierung der in den einzelnen Stufen entstehenden Produkte beliebig oft wiederholt werden.

Je nach Reaktionsführung ist es dabei erfindungsgemäß möglich, an den Endgruppen funktionalisierte Polymere, segmentierte Polymere, Block- oder Multiblock- sowie Gradienten(Co)Polymere, sternförmige (Co)Polymere, PfropfCopolymere und verzweigte und hyperverzweigte (Co)Polymere herzustellen.

Die erfindungsgemäße Umsetzung wird vorzugsweise so durchgeführt, daß ein Polymer (B) erhalten wird, das Blockstruktur aufweist. Dabei ist es erfindungsgemäß möglich, in einfacher Weise unter Verwendung einer einfach zugänglichen Verbindung (II) Blockcopolymere bereitzustellen, die z.B. einen hydrophilen Block, wie z.B. einen (Meth)acrylsäure- oder einen C₁₋₄- Alkyl(meth)acrylat-Block und eine weiteren, vorzugsweise hydrophoben Polymer-Block, wie z.B. einen Block auf der Basis von vinylaromatischen Monomeren, wie z.B. Styrol oder substituierten Styrolen, Acrylnitril, Dienen sowie nicht-aromatischen Vinylverbindungen, wie z.B. Vinylacetat, sowie höhere (> C₄) Alkyl(meth)acrylate aufweisen.

Ferner sind erfindungsgemäß auch Polymere der folgenden Struktur herstellbar: Poly((meth)acrylsäure-stat-(meth)acrylat-b-(styrol-stat-(meth)acrylat)), wobei der Begriff "(meth)acrylat", Alkylester der Methacrylsäure und Acrylsäure bezeichnet.

Im einzelnen sind die folgenden Blockcopolymere zu nennen:
Poly(acrylsäure-b-styrol), Poly(methylmethacrylat-b-styrol), Poly(styrol-b-vinylacetat), Poly(methacrylsäure-b-hydroxyethylacrylat), Poly(methacrylsäuremethylester-b-N-vinylpyrrolidon), Poly(methacrylsäuremethylester-b-N-vinylformamid), Poly(methacrylsäure-methylester-b-hydroxyethylacrylat), Poly(methacrylsäuremethylester-b-(styrol-stat-acrylnitril)), Poly(n-butylacrylat-b-styrol-b-n-butylacrylat), Poly(methylmeth-acrylat-b-styrol-b-methylmethacrylat-b-styrol), Poly(n-butylacrylat-b-styrol-b-n-butylacrylat-b-styrol).

Ferner sind beispielsweise Polymere der folgenden Struktur herstellbar, die in den erfindungsgemäßen Bindemittelzusammensetzungen verwendet werden können:
Poly((meth)acrylsäure-stat-(meth)acrylat-b-(styrol-stat-(meth)aerylat)), wobei der Begriff "(meth)acrylat", Alkylester der Methacrylsäure und Acrylsäure bezeichnet.
Im einzelnen sind die folgenden Blockcopolymeren zu nennen:
Poly(styrol-b-acrylsäure), Poly(styrol-b-acrylsäuremethylester), Poly(styrol-b-acrylsäureethylester), Poly(styrol-b-methacrylsäure), Poly(styrol-b-methacrylsäuremethylester), Poly(styrol-b-methacrylsäureethylester), Poly(hydroxyethylacrylat-b-methacrylsäure), Poly(N-vinylpyrrolidon-b-Acrylsäuremethylester), Poly(N-Vinylpyrrolidon-b-acrylsäureethylester), Poly(N-vinylpyrrolidon-b-Methacrylsäuremethylester), Poly(N-vinylpyrrolidon-b-Methacrylsäureethylester), Poly(N-vinylpyrrolidon-b-Styrol), Poly(N-vinylpyrrolidon-b-vinylacetat), Poly(N-vinylpyrrolidon-b-α-Methylstyrol), Poly(N-vinylformamid-b-Methacrylsäuremethylester), Poly(N-vinylformamid-b-Methacrylsäureethylester), Poly(N-vinylformamid-b-vinylacetat), Poly(N-vinylformamid-b-Acrylsäuremethylester) oder Poly(N-vinylformamid-b-acrylsäureethylester).
Weiterhin sind gemäß der vorliegenden Erfindung herstellbar:
Poly(methacrylsäuremethylester-b-(styrol-stat-acrylnitril)), Poly(n-butylacrylat-b-styrol-b-n-butylacrylat), Poly(styrol-b-n-butylacrylat-b-styrol), Poly(styrol-b-n-butylacrylat-b-styrol-b-n-butylacrylat), Poly(methylmeth-acrylat-b-styrol-b-methylmethacrylat-b-styrol), Poly(n-butylacrylat-b-styrol-b-n-butylacrylat-b-styrol), Poly(styrol-b-polybutadien), Poly(styrol-b-styrol-stat-butadien), Poly(styrol-stat-acrylnitril-b-butadien), Poly(styrol-stat-acrylnitril-b-styrol-stat-butadien), Poly(styrol-stat-acrylnitril-b-styrol-stat-acrylnitril-stat-butadien), Poly(styrol-b-vinylpyrrolidon), Poly(styrol-stat-acrylnitril-vinylpyrrolidon), Poly(n-butylacrylat-b-styrol), Poly(n-butylacrylat-styrol-acrylnitril) und deren ABA/ABC-Dreierblöcke oder höhere Blockpolymere und dergleichen.

Insbesondere läßt sich ein wäßriges Gemisch, das das Umsetzungsprodukt (A') enthält, als Primärdispersion verwenden. Das Umsetzungsprodukt (A') bzw. das Polymer (B) oder ein Gemisch aus zwei oder mehr davon werden können entsprechend dem Einsatzgebiet in hierfür geeigneter Form, insbesondere in Polymerdispersionen, verwendet werden.

## Patentansprüche

1. Verfahren zur Herstellung eines Umsetzungsprodukts (A'), das die folgende Stufe (i) umfaßt:
(i) Reaktion unter radikalischen Bedingungen eines Reaktionsgemischs, umfassend mindestens ein radikalisch umsetzbares Monomer (a) in Gegenwart mindestens einer Verbindung der Formel (II) 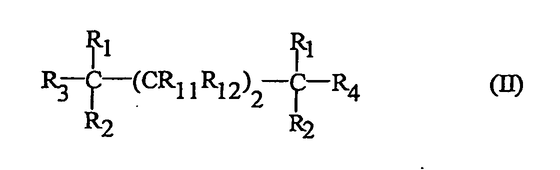 wobei R₁ bis R₄ und R₁₁ und R₁₂ jeweils unabhängig voneinander Wasserstoff, Methyl oder eine Radikale stabilisierende und/oder sterisch anspruchsvolle Gruppe ausgewählt unter einem jeweils unsubstituierten oder substituierten, linearen oder verzweigtkettigen Alkyl mit zwei oder mehr C-Atomen, Cycloalkyl-, Alkohol-, Ether-, Polyether-, Amin-, Aralkylrest, einen substituierten oder unsubstituierten aromatischen, heterocyclischen oder olefinischen Kohlenwasserstoff, ein Halogenatom, eine substituierte oder unsubstituierte, lineare oder verzweigtkettige Alkenyl- oder Alkinylgruppe, -C(O)R₅, -C(O)OR₅, -CR₅R₆-O-R₇, -O-C(O)R₅, -CN, -O-CN, -S-CN, -O-C=NR₅, -S-C=NR₅, -O-CR₅R₆-CR₇R₈NR₉R₁₀, -N=C=O, -C=NR₅, -CR₅R₆-Hal, -C(S)R₅, -CR₅R₆-P(O)R₇R₈, -CR₅R₆-PR₇R₈, -CR₅R₆-NR₇R₈, -CR₅R₆(OR₇)(OR₈), -CR₅R₆(OR₇)(NR₈), -CR₅R₆(NR₇)(NR₈), eine Säureanhydrid-, Acetal-, Ketalgruppe, -SO₂R₅, eine Amidingruppe, -NR₅C(S)NR₆, -NR₅C(S)-OR₆, -N=C=S, -NO₂, -C=N-OH, -N(R₅)=NR₆, -PR₅R₆R₇, -OSiR₅R₆R₇, oder -SiR₅R₆R₇, ist, wobei R₅ bis R₁₀ jeweils unabhängig voneinander wie R₁ bis R₄ definiert sind, oder zwei oder drei der Reste R₁ bis R₄ einen C₄- bis C₇-Ring der wiederum substituiert oder unsubstituiert sein kann sowie gegebenenfalls ein oder mehrere Heteroatome enthalten kann oder aromatisch sein kann, bilden,
mit der Maßgabe, daß
mindestens zwei der R₁ bis R₄ eine Radikale stabilisierende und/oder sterisch anspruchsvolle Gruppe, wie oben definiert, sind,
**dadurch gekennzeichnet, dass** die Reaktion in Gegenwart mindestens einer Base durchgeführt wird.

2. Verfahren nach Anspruch 1, wobei die Verbindung der Formel (II) als Radikale stabilisierende und/oder sterisch anspruchsvolle Gruppen folgende Kombinationen ausweist:
mindestens ein substituiertes oder unsubstituiertes Phenyl und -C(O)R₅;
mindestens ein substituiertes oder unsubstituiertes Phenyl und -CN;
mindestens ein substituiertes oder unsubstituiertes Phenyl und -C(O)OR₅;
unabhängig voneinander mindestens zwei substituierte oder unsubstituierte Phenylgruppen;
unabhängig voneinander mindestens zwei -C(O)OR₅; und
unabhängig voneinander mindestens zwei -CN.

3. Verfahren Anspruch 1 oder 2, wobei die Verbindung der Formel (II) ausgewählt wird unter:
1,4-Dialkoxy-1,1,4,4-tetraphenylbutan, 1,4-Dialkoxycarbonyl-1,1,4,4-tetraphenylbutan, 1,4-Dicyano-1,1,4,4-tetraphenylbutan, 1,4-(Trialkylsilyloxy)-1,1,4,4-tetraphenylbutan und Gemischen aus zwei oder mehr davon.

4. Verfahren nach einem der Ansprüche 1 bis 3, wobei die niedermolekulare Base NaOH, KOH, Ammoniak, Diethanolamin, Triethanolamin, Mono-, Di-, oder Triethylamin, Dimethylethanolamin, oder ein Gemisch aus zwei oder mehr davon ist.

5. Verfahren zur Herstellung eines Polymers (B), das umfaßt:
(ii) Umsetzung des in Stufe (i) erhaltenen Umsetzungsprodukts (A') unter radikalischen Bedingungen in Gegenwart von mindestens einem, radikalisch homö- oder copolymerisierbaren Monomer (b).

## Claims

1. A process for the preparation of a reaction product (A'), which comprises the following stage (i):
(i) Reaction, under free radical conditions, of a reaction mixture comprising at least one monomer (a), capable of free radical reaction, in the presence of at least one compound of the formula (II) 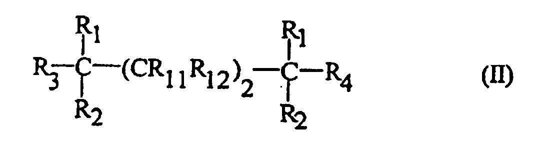 where R₁ to R₄ and R₁₁ and R₁₂, independently of one another, are each hydrogen, methyl or a group which stabilizes radicals and/or is bulky and which is selected from an unsubstituted or substituted, linear or branched alkyl of two or more carbon atoms, a cycloalkyl, alcohol, ether, polyether, amine or aralkyl radical, a substituted or unsubstituted aromatic, heterocyclic or olefinic hydrocarbon, a halogen atom, a substituted or unsubstituted, linear or branched alkenyl or alkynyl group, -C(O)R₅, -C(O)OR₅, -CR₅R₆-O-R₇, -O-C(O)R₅, -CN, -O-CN, -S-CN, -O-C=NR₅, -S-C=NR₅, -O-CR₅R₆-CR₇R₈NR₉R₁₀, -N=C=O, -C=NR₅, -CR₅R₆-Hal, -C(S)R₅, -CR₅R₆-P(O)R₇R₈, -CR₅R₆-PR₇R₈, -CR₅R₆-NR₇R₈, -CR₅R₆(OR₇)(OR₈), -CR₅R₆(OR₇)(NR₈), -CR₅R₆(NR₇)(NR₈), an anhydride, acetal or ketal group, -SO₂R₅, an amidine group, -NR₅C(S)NR₆, -NR₅C(S)-OR₆, -N=C=S, -NO₂, -C=N-OH, -N(R₅)=NR₆, -PR₅R₆R₇, -OSiR₅R₆R₇ or -SiR₅R₆R₇, where R₅ to R₁₀, independently of one another, are each defined in the same way as R₁ to R₄, or two or three of the radicals R₁ to R₄ form a C₄- to C₇-ring which in turn may be substituted or unsubstituted and may contain one or more heteroatoms or may be aromatic,
with the proviso that
at least two of the radicals R₁ to R₄ are a group which stabilizes radicals and/or is bulky, as defined above,
wherein the reaction is carried out in the presence of at least one base.

2. A process as claimed in claim 1, the compound of the formula (II) having the following combinations as groups which stabilize radicals and/or are bulky:
at least one substituted or unsubstituted phenyl and -C(O)R₅;
at least one substituted or unsubstituted phenyl and -CN;
at least one substituted or unsubstituted phenyl and -C(O)OR₅;
independently of one another, at least two substituted or unsubstituted phenyl groups;
independently of one another, at least two -C(O)OR₅; and
independently of one another, at least two -CN.

3. A process as claimed in claim 1 or 2, the compound of the formula (II) being selected from:
1,4-dialkoxy-1,1,4,4-tetraphenylbutane,
1,4-dialkoxycarbonyl-1,1,4,4-tetraphenylbutane,
1,4-dicyano-1,1,4,4-tetraphenylbutane,
1,4-(trialkylsilyloxy)-1,1,4,4-tetraphenylbutane
and mixtures of two or more thereof.

4. A process as claimed in any of claims 1 to 3, the low molecular weight base being NaOH, KOH, ammonia, diethanolamine, triethanolamine, mono-, di- or triethylamine, dimethylethanolamine or a mixture of two or more thereof.

5. A process for the preparation of a polymer (B), which comprises:
(ii) Reaction of the reaction product (A') obtained in stage (i), under free radical conditions, in the presence of at least one monomer (b) capable of free radical homopolymerization or copolymerization.

## Revendications

1. Procédé de préparation d'un produit de réaction (A'), qui comporte l'étape suivante (i) :
(i) une réaction dans des conditions radicalaires d'un mélange réactionnel comprenant au moins un monomère qui peut réagir par voie radicalaire (a) en présence d'au moins un composé de la formule (II) : 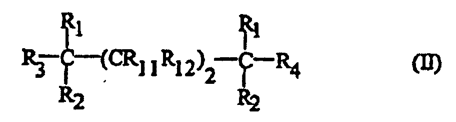 dans laquelle R₁ à R₄ et R₁₁ et R₁₂ représentent chacun indépendamment de l'hydrogène, du méthyle ou un groupe stabilisant des radicaux et/ou stériquement exigeant choisi parmi un radical alkyle à chaîne linéaire ou ramifiée, respectivement non substitué ou substitué, comportant deux ou plusieurs atomes de C, cycloalkyle, alcool, éther, polyéther, amine, aralkyle, un hydrocarbure aromatique, hétérocyclique ou oléfinique, substitué ou non substitué, un atome d'halogène, un groupe alcényle ou alcynyle à chaîne linéaire ou ramifiée, substitué ou non substitué,
-C(O)R₅,
-C(O)OR₅, -CR₅R₆-O-R₇, -O-C(O)R₅, -CN, -O-CN, -S-CN,
-O-C=NR₅, -S-C=NR₅, -O-CR₅R₆-CR₇R₈NR₉R₁₀, -N=C=O, -C=NR₅, -CR₅R₆-Hal, -C(S)R₅, -CR₅R₆-P(O)R₇R₈, -CR₅R₆-PR₇R₈, -CR₅R₆-NR₇R₈, -CR₅R₆(OR₇)(OR₈), -CR₅R₆(OR₇)(NR₈), -CR₅R₆(NR₇)(NR₈), un groupe anhydride d' acide, acétal, cétal, -SO₂R₅, un groupe amidine, -NR₅C(S)NR₆, -NR₅C(S)-OR₆, -N=C=S, -NO₂, -C=N-OH, -N(R₅)=NR₆, -PR₅R₆R₇, -OSiR₅R₆R₇ ou -SiR₅R₆R₇, R₅ à R₁₀ étant chacun défini indépendamment l'un de l'autre comme R₁ à R₄, ou deux ou trois des radicaux R₁ à R₄ forment un noyau en C₄ à C₇ qui, à son tour, peut être substitué ou non substitué, et contenir éventuellement un ou plusieurs hétéroatomes ou être aromatique,
à la condition que
au moins deux des R₁ à R₄ soient un groupe stabilisant les radicaux et/ou stériquement exigeant, comme défini ci-dessus,
**caractérisé en ce que** la réaction est effectuée en présence d'au moins une base.

2. Procédé suivant la revendication 1, dans lequel le composé de la formule (II) présente, comme groupes stabilisant les radicaux et/ou stériquement exigeants, les combinaisons suivantes :
au moins un phényle substitué ou non substitué et -C(O)R₅,
au moins un phényle substitué ou non substitué et -CN,
au moins un phényle substitué ou non substitué et -C(O)OR₅,
au moins deux groupes phényle substitués ou non substitués indépendamment l'un de l'autre,
au moins deux -C(O)OR₅ indépendamment l'un de l'autre, et
au moins deux -CN indépendamment l'un de l'autre .

3. Procédé suivant la revendication 1 ou 2, dans lequel le composé de la formule (II) est choisi parmi :
du 1,4-dialcoxy-1,1,4,4-tétraphénylbutane, du 1,4-dialcoxycarbonyl-1,1,4,4-tétraphénylbutane, du 1,4-dicyano-1,1,4,4-tétraphénylbutane, du 1,4-(trialkylsilyloxy)-1,1,4,4-tétraphénylbutane et des mélanges de deux ou plusieurs d'entre eux.

4. Procédé suivant l'une des revendications 1 à 3, dans lequel la base de faible poids moléculaire est NaOH, KOH, de l'ammoniac, de la diéthanolamine, de la triéthanolamine, de la monoéthylamine, de la diéthylamine ou de la triéthylamine, de la diméthyléthanolamine ou un mélange de deux ou de plusieurs d'entre eux.

5. Procédé de préparation d'un polymèrè (B) qui comprend :
(ii) une réaction du produit de réaction (A') obtenu dans l'étape (i) dans des conditions radicalaires, en présence d'au moins un monomère homopolymérisable ou copolymérisable par voie radicalaire (b).
